# EUROPEAN PATENT SPECIFICATION

(11) **EP 3 766 700 B1**
(45) Date of publication and mention of the grant of the patent: **21.06.2023**
(21) Application number: 20186261.2
(22) Date of filing: 16.07.2020
(51) Int. Cl.: B32B 29/00, B32B 1/02, B32B 3/08, B32B 15/085, B32B 15/09, B32B 15/12, B32B 15/20, B32B 27/10, B32B 27/32, B32B 27/36, B65D 5/06, B65D 65/40, B29C 45/14

(54) **PACKAGING MATERIAL AND A MANUFACTURING PROCESS THEREOF**
VERPACKUNGSMATERIAL UND HERSTELLUNGSVERFAHREN DAFÜR
MATÉRIAU D'EMBALLAGE ET SON PROCÉDÉ DE FABRICATION

(30) Priority: 17.07.2019 EP 19186675
(43) Date of publication of application: 20.01.2021
(73) Proprietor: Tetra Laval Holdings & Finance S.A., 1009 Pully (CH)
(72) Inventor: TOFT, Nils, 224 72 Lund (SE); JOHANSSON, Per, 217 63 Malmö (SE)
(74) Representative: Tetra Pak - Patent Attorneys SE

(56) References cited:
- WO-A1-2017/072007
- JP-A- 2019 038 593
- US-A1- 2016 325 878
- US-A1- 2017 259 979
- US-A1- 2018 215 521

## Description

### Technical Field

The present invention relates to a packaging material, in particular to a laminated packaging material, and to a method for manufacturing the laminated packaging material.

Furthermore, the invention relates to packaging containers being made of the laminated packaging material.

### Background Art

Carton based packaging containers for liquid food products are well known. For instance, Tetra Brik^{®} packaging containers are used in many parts of the world for milk, juice and other beverages. There are several reasons why carton based packages have gained popularity. The environmental benefits of the packages, e.g. that the packages are to a large extent produced by renewable material, and the efficient logistics of brick shaped packages are some reasons why consumers today choose carton based packages instead of plastic bottles. Other reasons why carton based packages are popular are that the packaging machines producing the packaging containers are robust and cost efficient compared to other alternatives, and that the total cost for running a carton based packaging machine is very competitive.

Packaging containers for pourable food products need to have some barrier properties in order for the filled and unopened packaging containers to be able to be stored properly. The required shelf-life and the type of barrier needed depend on the type of food product, the type of packaging material, the type of packaging container, the type of opening device of the packaging container etc., and also on aseptic aspects and intended storage conditions. Generally, in all cases some degree of oxygen barrier is needed.

The packaging material is produced by laminating a plurality of polymer layers to a core material layer of carton or paperboard. The polymer layers protect the core material layer, which typically is made of carton or paperboard, from the liquid content of the resulting packaging container as well as from the humid outside environment. As packaging material manufacturing processes are improved in terms of speed and quality, and as polymer layers are improved and developed to be laminated in yet thinner layers, it is possible to reduce the total amount of polymer material for the laminated layers of the packaging material. The inside polymer layer is however also used to seal the packaging material when individual packaging containers are formed and filled. The general desire of reducing the polymer layer thickness of the inside of the packaging material is therefore in conflict with the requirement of having a sufficiently thick polymer layer in order to ensure proper sealings of the packaging material.

International patent application No. WO2017/072007A1 relates to a package and a method of manufacturing the package, by injection moulding elements of plastics to the outside of the package, for decorative and other purposes.

US patent application No. US2018/0215521 A1 relates to a closure device of plastics, applied to a packaging material by injection moulding.

US patent application No. US2016/0325878A1 relates to a package with an injection moulded opening device and a method of manufacturing it by high pressure micro-injection moulding, to create openings.

Thus, there is a need for an improved packaging material ensuring robust sealings, while still allowing the total polymer layer material to be reduced.

### Summary

It is an object of the invention to at least partly overcome one or more of the above-identified limitations of the prior art.

To solve these objects, a packaging material for liquid food products is provided. The packaging material comprises a core layer, an outermost layer arranged to face the exterior of a packaging container made of the packaging material, and an innermost layer arranged to face the interior of the packaging container, said outermost layer and said innermost layer being laminated to the core layer. The laminated packaging material further comprises a locally applied heat sealable material portion arranged on the innermost layer. The heat sealable material portion is arranged at sealing areas corresponding to the position of transversal seals of the resulting packaging container.

The heat sealable material portion may be adhered to the innermost layer by means of a heat application process.

The heat application process may be an injection moulding process, a sintering process, a welding process, a spraying process, an ink-jet type of polymer printing process, or a 3D printing process.

The heat sealable material portion has a cross-section having a width which increases towards the innermost layer, i.e. towards its base at the substrate surface.

The heat sealable material portion may have a cross-section having the shape of a triangle, or a truncated triangle. Alternatively, the heat sealable material portion may have a cross-section having the shape of the top of a circle or a half-circle.

The heat sealable material portion may have a cross-section having an asymmetric shape.

The heat sealable material portion may be arranged to have a varying cross-section along the extension of the transversal sealing areas.

The heat sealable material portion may have a cross-section providing a higher amount of polymer material at predetermined positions along the extension of the transversal sealing areas. In particular, such a cross-section may have a wider base, i.e. an increased width towards the innermost layer and/or a steeper inclination towards the apex or top of the cross-section.

The heat sealable portion may be applied only at some parts along the extension, or along the entire extension, of the transversal sealing areas.

The heat sealable material portion may have an enclosed cavity, i.e. be hollow inside.

The thickness of the heat sealable material portion may be 2-50 µm, preferably 3-30 µm, such as 3-20 µm, or 5-20 µm, and most preferred 5-15 µm.

The heat sealable material portion may be made of a thermoplastic material, such as a thermoplastic polymer.

The thermoplastic polymer may be selected from the group consisting of polyolefins and polyesters.

The thermoplastic polymer may be selected from the group consisting of polyethylene, polypropylene, polyethylene therephthalate (PET), polyethylene furanoate (PEF), polylactic acid polymer or copolymer (PLA), Polyhydroxyalkanoates (PHA) and blends or copolymers of two or more thereof.

The thermoplastic polymer of the locally applied heat sealable material portion may be selected from the group consisting of low density polyethylene LDPE, high density polyethylene HDPE, linear low density polyethylene LLDPE or single site catalysed linear low density polyethylene m-LLDPE, very low density polyethylene (VLDPE), ultra low density polyethylene (ULDPE) and blends and copolymers of two or more thereof.

The thermoplastic polymer may be a biodegradable polymer selected from the group consisting of polylactic acid polymer or copolymer (PLA), polyhydroxyalkanoates (PHA), cellulose or cellulose derivatives and blends or copolymers of two or more thereof. Examples of PHA are i.a. poly-3-hydroxybutyrate (PHB), polyhydroxyvalerate (PHV) and polyhydroxyhexanoate (PHH).

The heat sealable material portion may be arranged along the entire extension of the transversal sealing areas, or partly along the extension of the transversal sealing areas.

The heat sealable material portion may be arranged to have a varying cross-section along the extension of the transversal sealing areas.

The packaging material may further comprise a barrier layer arranged between the core layer and the innermost layer.

The barrier layer may be an aluminium foil or a metallised aluminium layer. The barrier may alternatively be a non-aluminium foil ("non-foil") barrier, such as for example a vapour deposited coating of an inorganic oxide, metal oxide or a diamondlike carbon (DLC), such as a dispersion coated layer of polyvinyl alcohol (PVOH), ethylene vinyl alcohol (EVOH), starch or starch derivative, cellulose or cellulose derivative (such as micro-/nano-fibrillar cellulose), or such as a polymer barrier, such as a polyamide or ethylene vinyl alcohol (EVOH).

The core layer may be a cellulose based material, such as paper or paperboard.

According to a second aspect, a method for producing a packaging container using a laminated packaging material is provided. The method comprises the steps of: laminating an innermost layer and an outermost layer to a core layer or providing a laminated packaging material having an innermost layer and an outermost layer laminated to a core layer, heat applying a heat sealable material portion locally to said innermost layer, forming a packaging container open in one end from said packaging material, filling the packaging container through the open end and heat sealing the package container by means of the heat sealable material portion to form a closed packaging container.

Heat applying may be performed using an injection moulding process, a sintering process, a welding process, a spraying process, an ink-jet type of polymer printing process, a compression moulding process or a 3D printing process. The preferred heat application processes are injection moulding, such as high-pressure micro-injection moulding, ink-jet type of polymer printing and 3D printing, because these processes allow for shaping of the final geometry of the locally applied heat sealable material portion in a better way. High-pressure micro-injection moulding is the most preferred process, since it enables higher speeds of heat application and may involve very small amounts of polymer, and are thus suitable for high-speed packaging processes in filling and packaging machines.

The innermost layer may be a heat sealable polymer, preferably a thermoplastic polymer selected from polyolefins, such as polyethylenes, and from polyesters.

The innermost layer may be a heat sealable thermoplastic polymer selected from the group consisting of polyethylene, polypropylene, polyethylene therephthalate (PET), polyethylene furanoate (PEF), polylactic acid polymer or copolymer (PLA), Polyhydroxyalkanoates (PHA) and blends or copolymers of two or more thereof.

The innermost layer may be a heat sealable thermoplastic polymer selected from the group consisting of polyethylene (PE), polypropylene (PP), polyethylene terephthalate (PET), polyethylene furanoate (PEF) and any blend or copolymer of one or more thereof.The innermost layer may be thermoplastic polymer selected from the group consisting of polyethylene (PE) or polyethylene terephthalate (PET), and the material of the heat sealable material portion may be polyethylene (PE).

The thermoplastic polymer of the innermost layer and of the locally applied heat sealable material portion may be of the same type or of a different type of polymer.

The innermost layer may comprise a thermoplastic polymer selected from the group consisting of low, medium and high density polyethylene (LOPE, MDPE, HDPE), linear low density polyethylene and single-site or metallocene catalysed linear low density polyethylene (LLDPE, m-LLDPE) and polypropylene (PP) and blends and copolymers of two or more thereof.

The material of the heat sealable material portion may comprise a thermoplastic polymer selected from the group consisting of high/medium density polyethylene (HDPE, MDPE), low density polyethylene (LDPE), linear low density polyethylene (LLDPE, m-LLDPE), and blends and copolymers of two or more thereof.

The thermoplastic polymer of the innermost layer may be selected from the group consisting of low density polyethylene LDPE, high density polyethylene HDPE, linear low density polyethylene LLDPE or single site catalysed linear low density polyethylene m-LLDPE, and blends and copolymers of two or more thereof.The seal initiation temperature, i.e. the softening temperature, such as Vicat point or glass temperature (Tg) of the thermoplastic polymer of the of the locally applied heat sealable material portion may be equal to, or lower than a corresponding seal initiation temperature of the thermoplastic polymer of the innermost layer. The seal initiation temperature of the thermoplastic polymer of the of the locally applied heat sealable material portion may be 4 K, such as 5 K, such as 10 K lower than the respective or corresponding temperature of the innermost layer.
The melt temperature (Tm) of the thermoplastic polymer of the of the locally applied heat sealable material portion may be equal to, or lower than a corresponding melt temperature of the thermoplastic polymer of the innermost layer. The melt temperature of the thermoplastic polymer of the of the locally applied heat sealable material portion may be 4 K, such as 5 K, such as 10 K lower than the melt temperature of the innermost layer. The heat sealable material portion is applied such that the cross-section has a width which increases towards the innermost layer. In an embodiment, the locally applied heat sealable material portion has a triangular cross-section or a cross-section having the shape of a truncated triangle. The cross-section configuration of a triangle or truncated triangle of the locally applied heat sealable material portion provides an optimal heat sealing operation in terms of operation efficiency, amount of material used and strength of the resulting heat seal joint.

The heat sealable material portion may have a cross-section having the shape of a triangle, or a truncated triangle. Alternatively, the heat sealable material portion may have a cross-section having the shape of the top of a circle or a half-circle.

The heat sealable material portion may have a cross-section having an asymmetric shape.

The heat sealable material portion may be arranged to have a varying cross-section along the extension of the transversal sealing areas.

The heat sealable material portion may have a cross-section providing a higher amount of polymer material at predetermined positions along the extension of the transversal sealing areas. In particular, such a cross-section may have a wider base, i.e. an increased width towards the innermost layer and/or a steeper inclination towards the apex or top of the cross-section.

The heat sealable portion may be applied only at some parts along the extension, or along the entire extension, of the transversal sealing areas.

The heat sealable material portion may have an enclosed cavity, i.e. have a hollow structure.

According to a third aspect, a packaging container made of a packaging material comprising a core layer and a thereto laminated outermost layer and an innermost layer is provided. A heat sealable material portion is locally arranged on the innermost layer.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1 is a schematic view of the principle of a packaging machine for continuous roll-fed packaging of liquid food products;
Figs. 2a-b are cross-sectional views of a packaging material according to different embodiments;
Fig. 3a is a planar view of a packaging material according to an embodiment;
Fig. 3b is an isometric view of a package formed from the packaging material shown in Fig. 3a;
Figs. 4a-c illustrate three stages of an injection moulding process for providing a heat sealable material portion on an innermost layer of a packaging material according to an embodiment;
Figs. 5a-c illustrate three stages of an injection moulding process for providing a heat sealable material portion on an innermost layer of a packaging material according to an embodiment;
Fig. 6 is a flow chart of a method for producing a packaging material.
Fig. 7a-d shows further alternatives to the cross-sections in Figs. 4c and 5c;
Fig. 8 shows a fold-formed tube to be transversally sealed, having locally applied heat sealable material portions applied along at least some parts of the extension of the transversal seal area;
Fig. 9 shows the transversal sealing area as seen from above on the inside of a web of flat packaging material; and
Fig. 10 shows an isometric view along the extension of the transversal seal area with the locally applied heat sealable material portion.

### Detailed Description

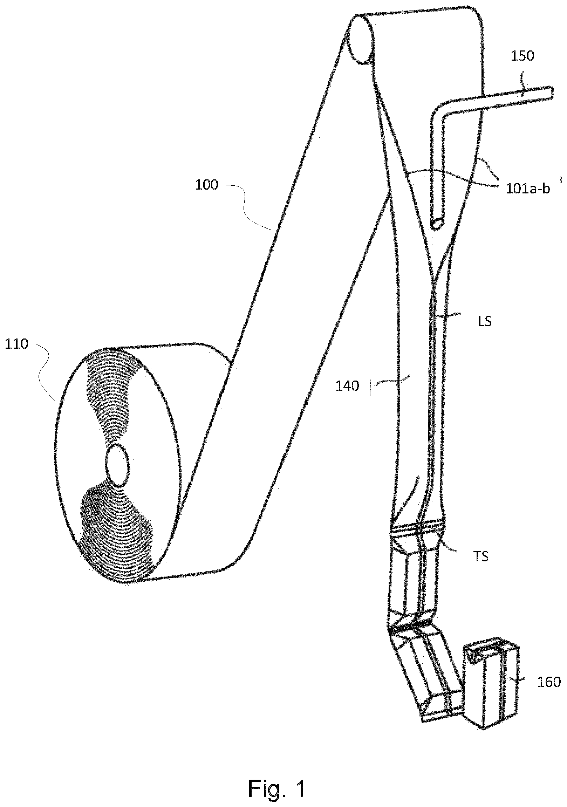

Starting in Fig. 1, the basic principle of a roll fed carton based packaging machine is shown. The packaging machine is configured for continuous packaging of e.g. liquid food products, and forms the general technical concept used for various different packaging systems, such as the commercially successful Tetra Brik^{®} packaging system. The packaging machine receives a packaging material 100, either in the form of a continuous web (as is shown in Fig. 1).

After unwinding the packaging material 100 from a reel 110 its longitudinal side edges 101a-b are brought together to form a longitudinal seal LS, thereby also forming a continuous tube 140 of the packaging material 100. More particularly, the longitudinal side edges 101a-b are attached to each other continuously in an overlapping manner. The tube 140 is filled with a desired product, preferably a liquid food product, from a filling pipe 150.

A series of packages 160 are formed from the tube 140 by making transversal sealings TS at an end of the tube 140, and cutting off the sealed portions, each sealed portion representing an individual package 160, as they are formed. In order to shape the packages 160 different forming tools can be used during the transversal sealing operation, or a separate forming process can be performed after the transversal sealing has been performed.

Alternatively, a blanks fed packaging machine is used. The blanks, in the form of pre-cut pieces of packaging material with two ends welded together such that a folded and sealed tubular sleeve is formed, are fed to the filling machine. The blanks are erected into an open sleeve, and then folded and sealed such that a closed top or bottom is formed. It is thereafter filled with product and sealed and folded at the open end such that a filled package container is obtained.

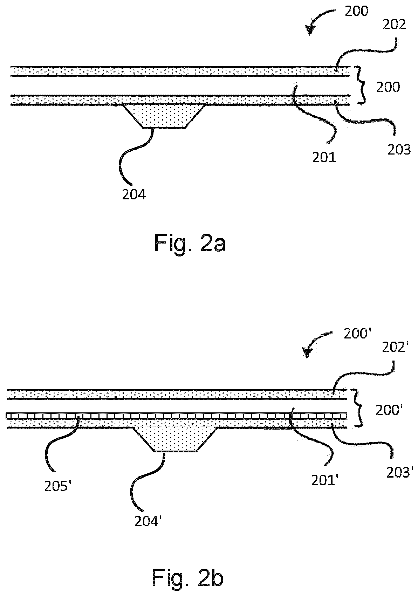

Fig. 2a shows a cross-section of a laminated packaging material 200 according to an embodiment. It comprises a bulk or core layer 201 which may be a fibre based material, such as a cellulose based material. The bulk layer may comprise a cellulose-based material, such as paper or paperboard. The laminated packaging material 200 further comprises an outermost layer 202 on the outside of the bulk layer 201. Hence, the outermost layer 202 is configured to face an exterior of a package 160 formed from said laminated packaging material 200. The outermost layer 202 is preferably a protective thermoplastic polymer layer, which works as a barrier to liquid and also has thermoplastic properties for heat sealing purposes. In addition, the laminated packaging material 200 in Fig. 2a comprises an innermost layer 203 on the inside of the bulk or core layer 201. The innermost layer 203 is thus conjured to face an interior of the package 160 made from the laminated packaging material 200 and to be in direct contact with its content, such as milk, juice or other food products. The innermost layer 203 is traditionally a heat sealable material portion and when two surfaces of the innermost layers 203 of the laminated packaging material 200 is placed in direct contact with each other, compressed and heated, they at least partially melt and adhere to each other forming a strong, bonding seal. This is what occurs when forming the transversal seals TS as described with reference to Fig. 1. The innermost layer 203 may be a heat sealable polymer, preferably a thermoplastic polymer selected from polyolefins, such as polyethylenes, and from polyesters. The innermost layer 203 may be selected from the group consisting of polyethylene (PE), polypropylene (PP), polyethylene terephthalate (PET), polyethylene furanoate (PEF) and any blend or copolymer of one or more thereof. The innermost layer 203 also has liquid barrier properties to provide a liquid-tight layer towards filled liquid food products. The packaging material 200 in Fig. 2a further comprises a locally applied portion 204 of a heat sealable material arranged on top of one or more portions of the innermost layer 203. The locally applied heat sealable portion 204 also comprises a heat sealable thermoplastic polymer, selected from polyolefins, such as polyethylenes or polypropylenes, and from polyesters, such as polyethylene terephthalate (PET) or polyethylene furanoate (PEF). In an embodiment, the innermost layer as well as the locally applied heat sealable material comprises a polyethylene, such as low density polyethylene LDPE, high density polyethylene HDPE, linear low density polyethylene LLDPE or single-site catalysed linear low density polyethylene m-LLDPE, or blends or copolymers thereof.

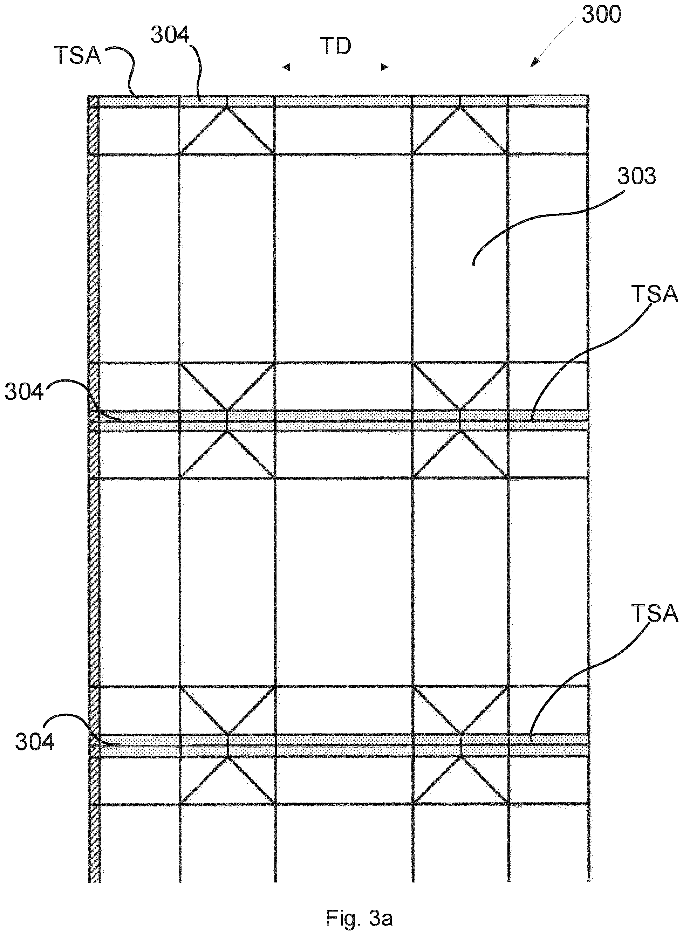

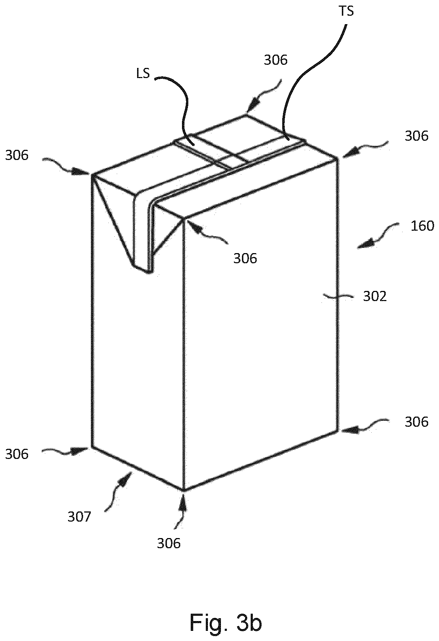

Fig. 2b shows yet another embodiment of a cross-section of a laminated packaging material 200'. Similarly to the laminated packaging material 200 in Fig. 2a, the packaging material 200' in Fig. 2b comprises a bulk layer 201', an outermost layer 202', an innermost layer 203' and a heat sealable material portion 204'. In addition, the packaging material 200' further may comprise a barrier layer 205', such as an aluminium foil or a thin metallised aluminium layer, laminated between the innermost layer 203' and the bulk or core layer 201'. The cross-sections of Figs. 2a and 2b are taken in a direction perpendicular to a longitudinal extension of the transversal seal TS and/or the sealing element 204, 204'. This will be further illustrated with reference to Fig. 3 below.

The laminated packaging materials 200, 200' shown in Figs. 2a and 2b provide layers acting as liquid-tight and gaseous barriers. The laminated packaging material 200, 200' may comprise additional plastic layers or other barriers (not shown) on both sides of the bulk layer 201, 201'.

It should be noted that the dimensions of the heat sealable material portions 204, 204' are exaggerated for illustrative purposes. The width of the heat sealable material portions 204, 204' should be selected to provide a sufficient sealing in the longitudinal direction of the package 160, while the length of the heat sealable material portions 204, 204' should be selected to extend along the entire sealing of the package 160. The thickness of the heat sealable material portions 204, 204' should be selected such that a sufficient bonding is obtained, and may be from 5 to 50 µm, such as from 5 to 30 µm, such as from 5 to 20 µm.

Fig. 3a shows a laminated packaging material 300 which is to be folded, formed, and sealed into a package 160. An inner surface of an innermost layer 303 of the packaging material 300 is shown. Certain transversal seal areas TSA of the innermost layer 303 of the packaging material 300 will be part of transversal seals TS formed when producing the packaging container 160. These areas TSA are indicated by dotted areas in Fig. 3a. The dotted areas TSA extend in a transversal direction (TD) indicated by the arrow in Fig. 3a and heat sealable material portions304 are applied to the transversal seal areas TSA of the packaging material 300. The packaging material 300 is provided with crease lines indicating where to fold the packaging material 300 in order to form a package160, as shown in Fig. 3b.Fig. 3b shows a flat-top package 160 made of the disclosed laminated packaging material 200, 200'. The package 160 comprises a longitudinal sealing LS and two transversal sealings TS (only the upper transversal sealing TS is shown). It has an outermost surface 302, corners 306 and a bottom side edge 307. Although the package shown in Fig. 3b is a flat-top package, it should be understood that the inventive packaging material 200, 200' is applicable to any type of package having transversal seals TS.When providing the packaging material with a thinner liquid barrier layer before forming the package 160, it must be ensured that a sufficient liquid barrier effect is attained on all different parts of the package 160. The thickness of the innermost layer 203, 203' forming the transversal seals TS needs to be sufficiently thick in order to provide a desired seal. However, applying a continuous thick innermost layer of a thermoplastic polymer 203, 203' being a heat sealable plastic is expensive and actually has proven to involve more such thermoplastic polymer than is actually needed for the heat sealing performance and for the integrity of the resulting package .

The inventors have thus surprisingly found that it is sufficient and resource-saving, i.e. saving total raw material thermoplastic polymer amounts, to reduce the overall thickness of the innermost layer 203, 303' but to instead provide the laminated packaging material 200, 200' with the locally applied heat sealable material portion 204, 204' at certain areas of the innermost layer 203, 203' of the packaging material, as for example shown in Figs. 2a and 2b. The heat sealable material portion 204, 204' are to be part of seals, such as transversal seals TS, of a formed package, and will provide a sufficient amount of thermoplastic polymer material to obtain robust seals. In this way, less material for the innermost layer 203, 203' can be used, forming a thinner innermost layer 203, 203' and thereby a more environmentally sustainable package. In addition, the production costs can be reduced since less material for the innermost layer 203, 203' is used. Additional locally applied volumes of thermoplastic polymer may be applied at areas of the package where further protection and mechanical properties may be needed, such as at corner folding areas and at areas where the laminated packaging material is to be folded in multiple folds upon each other (under bottom flaps and TS folds, for example).

Since the heat sealable material portions 204, 204' are applied non-homogenously on the laminated packaging material 200, 200', they may preferably be provided to the packaging material 200, 200' after the packaging material 110, 300 has been produced. The process of forming the laminated packaging material 100, 200, 200' without the heat sealable material portions 204, 204' is performed through a well-known manufacturing process also called converting, involving lamination operations. The bulk layer 201, 201', innermost layer 203, 203' and outermost layer 202, 202' and optionally the barrier layer 205', such as an aluminium foil or a metallised film, or other layers providing an oxygen barrier, as well as additional lamination layers are laminated together during the converting process. The thickness of the innermost layer 203, 203' may be in the range of 1 to 50 µm, 2-50 µm, preferably 2-40 µm, 2-30 µm, 3-30 µm, 3-20 µm, 5-20 µm, 3-15 µm, 5-15 µm.

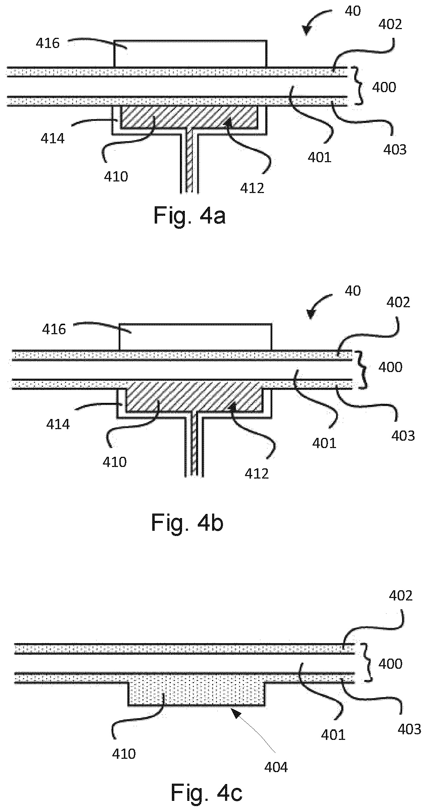

An exemplary formation of the heat sealable material portions 204, 204', 404 using injection moulding is shown in Fig. 4a-4c. To form the heat sealable material portions 204, 204', 404 on the innermost layer 203, 203', 403 of the laminated packaging material 110, 300, an injection moulding unit 40 is utilized before forming the package 160.

In Figs 4a-c, a first example of how a heat sealable material portion 404 can be formed though an injection moulding process is shown. The laminated packaging material 400 in this example comprises a bulk layer 401, an outermost layer 402 and an innermost layer 403. In a first stage, illustrated in Fig. 4a, molten plastic material 410, e.g. polyethylene, is transferred into a cavity 412 formed between a first mould 414 and a second mould 416.

In a second stage of this example, illustrated in Fig. 4b, the molten plastic material 410 has heated the innermost layer 403 such that this has at least partly been melted, illustrated in that a dotted area which illustrates a solid material, has been replaced by a dashed area, illustrating melted material.

In a third stage of this example, shown in Fig. 4c, the plastic material 410 and the innermost layer 403 have both solidified, and the first mould 414 and the second mould 416 have been removed. In this stage the heat sealable material portion 404 has been formed. The heat sealable material portion 404 and the innermost layer 403 are bonded together due to that the innermost layer 403 was at least partly melted during the injection moulding of the heat sealable material portion 404.

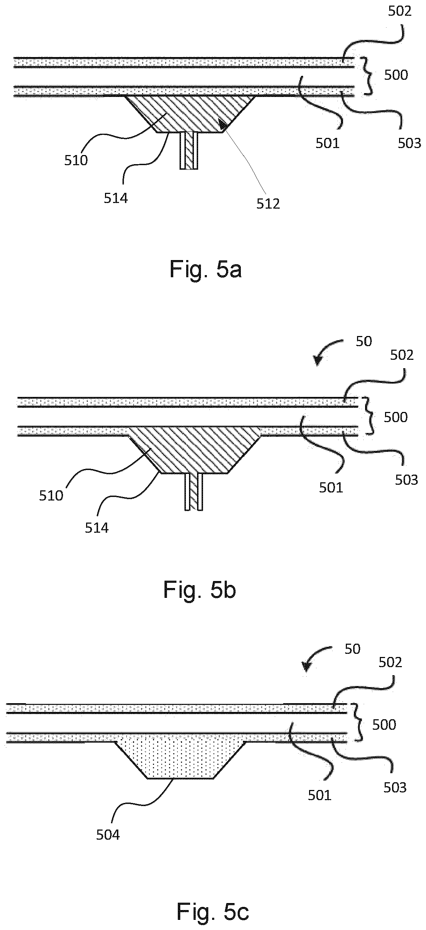

The heat sealable material portion 404 shown in Fig. 4c shows a rectangular cross-section. The heat sealable material portion 404 is, however, provided to have a width which increases towards the base and the substrate, i.e. towards the innermost layer, i.e. to have a triangular cross-section, or a cross-section having the shape of a truncated triangle as shown in Figs. 5a-c. This is preferable since a successively increased pressure is obtained when the heat sellable portion materials 404 are brought together to form a seal. This in turn prevents the polymer from flowing outside the transversal seal areas TSA.

In addition a larger interface area between the heat sealable material portion 404 and the innermost layer 403 is achieved using a geometry of the heat sealable material portion 404 having a width which increases towards the innermost layer 403. By providing a triangular cross-section, or a cross-section having the shape of a truncated triangle, perpendicular to a transversal direction TD of the heat sealable material portion 404, more thermal energy is applied at the interface, thereby improving bonding of the heat sealable material portion 404 to the innermost layer 403. This is illustrated in Figs. 5a-c.

In Figs. 5a-c the laminated packaging material 500 comprises a bulk layer 501, an outermost layer 502 and an innermost layer 503. In a first stage, illustrated in Fig. 5a, molten plastic material 510, such as PE, is transferred into a cavity 512 formed between a mould 514 and the innermost layer 503.

In a second stage, illustrated in Fig. 5b, the molten plastic material 510 has heated the innermost layer 503 and has at least partly melted it. This is illustrated in the same way as in Fig. 4b, with the dashed and dotted areas.

In a third stage shown in Fig. 5c, the plastic material 510 and the innermost layer 503 have both solidified, and the mould 514 has been removed. The heat sealable material portion 504 has been formed.

It should be noted that the heat sealable material portions 404, 504 of Figs. 4a-c and Figs. 5a-c are not to scale.

To facilitate a successful bonding between the innermost layer 203, 403, 503 and the heat sealable material portion 204, 404, 504, the interface between the innermost layer 203, 403, 503 and the heat sealable material portion 204, 404, 504 should have a desired temperature for as long as possible. The triangular shape of the cross-section, or a cross-section having the shape of a truncated triangle, prevents the heat sealable material portion 204, 404, 504 to flow outside the transversal seal areas TSA since the joining of heat sealable material portion 204, 404, 504 to form a seal generates an increased pressure. The cross-section also yields a larger surface area in the interface between the two surfaces than a rectangular shape of the cross-section if the same volume of the material forming the sealing element 204, 404, 504 is used.

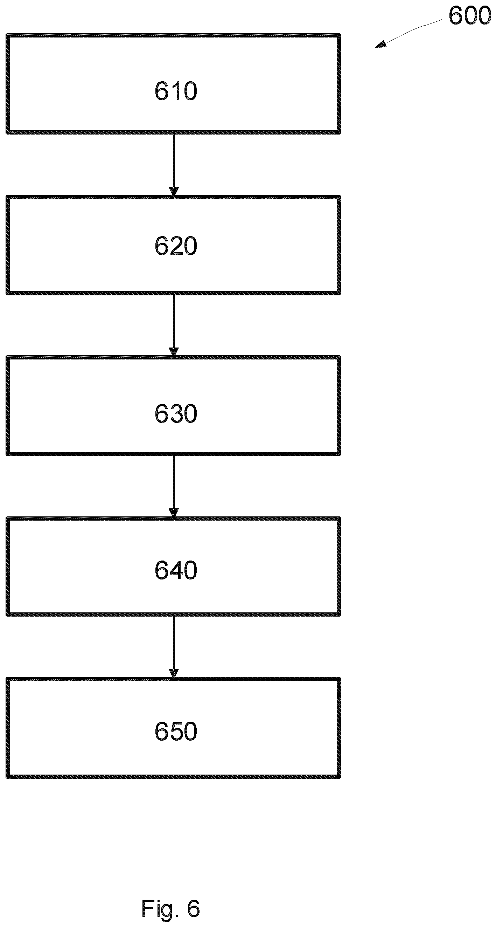

Fig. 6 shows a block diagram of a method 600 for forming the laminated packaging material 200, 200', 400, 500 comprising one or more heat sealable material portions 204, 204', 404, 504 according to an embodiment. The method comprises the steps of providing a laminated packaging material 100, 300, such as a web as shown in Fig. 1. The laminated packaging material 100, 300 may have been produced in a converting process, for instance using converting processed as disclosed in e.g. EP3409462A1 or WO2018220134A1 by the same applicant.

The provided packaging material 100, 300 which has been produced in a converting process is unwound from its roll 110 and placed 620 in a heat sealable material portion forming station 40, 50 for forming the heat sealable material portions 204, 404, 504. The station 40, 50 is placed inside a filling machine or just before entry to the filling machine. The station 40, 50 may be an injection moulding station as shown in Figs. 4a-c and 5a-c, or a spraying station, an ink-jet type of polymer printing station, a sintering station, a welding station or a 3D printing station.

Optionally, the laminated packaging material 100, 300 is placed 630 in contact with at least one mould 414, 416, 514. The mould 414, 416, 514 may have various shapes, forming heat sealable material portions 204, 204', 404, 504 of different geometries. The moulds 414, 416, 514 may for instance have a cross-section perpendicular to the extension of the sealing elements 204, 204', 404, 504 which is triangular, rectangular, hemispherical, or having the shape of a truncated triangle. The cross-section has a width which increases towards the innermost layer, as shown in Figs 5a-b.

Subsequently, the heat sealable material portions 204, 204', 404, 504 are formed 640 by applying a heat sealable material 410, 510 onto the innermost layer 203, 203', 403, 503 of the laminated packaging material 110, 300. Optionally, the heat sealable material 410, 510 is applied by injecting the material into a cavity 412, 512 of the mould 414, 416, 514 as shown in Figs. 4a-c and 5a-c. The heat sealable material 410, 510 may be a liquid or a solid material. For instance, it may be a melted material used during injection moulding, spraying, coating or during an ink-jet process, or it may be a powder which is applied on the innermost layer 203, 203', 403, 503 and sintered to attach to the innermost layer 203, 203', 403, 503.

Injection moulding is a well-established technique not the least for some of the suggested materials: PE, PP and PET. When manufacturing only small devices from these materials on a forward-moving packaging laminate material in a filling and packaging machine, using high-pressure micro-injection moulding, a first mould half having a first cavity is arranged on a first side of a fibre based packaging laminate, and a second mould half having a second cavity is arranged on an opposing side of the fibre based packaging laminate. Usually, the first mould cavity partly overlaps the second mould cavity in one or more overlapping areas. A small amount of a polymer melt is then injected into at least the first cavity. Due to pressure being built up in the first cavity, the melt will penetrate through the fibre-based packaging laminate in an overlapping area and also fill the second cavity for generation of an opening device extending through the packaging laminate.

The small amount of plastic employed by this technology vouches for that even if only a surface layer has started to solidify, this will be enough to retain the shape of the device until it has fully solidified, which in turn implies that the mould will be opened basically as soon as the injection is finalized. An outermost skin layer of the plastic melt will solidify as soon as it contacts the walls of a mould cavity, or the outermost layer of the packaging material. For non-complex designs this vouches for that the mould may be opened as soon as it is filled.

By the connection of the two parts, one on each side of the packaging material, i.e by the moulded so-called "bridge", opening devices may be created that can apply forces on both sides of the material during opening, in an interactive way to promote easy opening while still using very little polymer material for the moulded parts of the opening device. Moreover, the high-pressure micro-injection moulding technology ensures a very time-efficient moulding process in high-speed filling machines, in the same operations as packages are formed, filled and sealed.

The heat sealable material 410, 510 is applied along what is to become transversal seals TS on the package formed from the finished laminated packaging material 200, 200', 400, 500.

After the application of the heat sealable material 410, 510, the material 410, 510 is in direct contact with the innermost layer 203, 403, 503 of the laminated packaging material 100. A large surface area at the interface between the innermost layer 203, 403, 503 and the heat sealable material 410, 510 is advantageous for forming a seal between the heat sealable material portion 410, 510 and the surface of the innermost layer 203, 403, 503.

Finally, the heat sealable material portion 204, 204', 404, 504 is bonded to the innermost layer when said heat sealable material 410, 510 solidify. The packaging material 200, 200', 300, 400, 500 may subsequently proceed to a filling station and be formed into a package container 160, for example a package container 160 as shown in Fig. 3b.

The method 600 for producing a laminated packaging material 200, 200', 300, 400, 500 comprising a locally distributed heat sealable material portion 204, 204', 304, 404, 504 is performed after the converting process. Either, the method 600 is performed inside a filling machine or directly before the packaging material 100 enters the filling machine, after it has been unwound from the reel 110. Hence, feeding of the laminated packaging material 200, 200', 300, 400, 500 should be sufficiently slow to allow for the attached heat sealable material portion 204, 204', 304, 404, 504 to solidify. The speed of the packaging material may for instance be in the range of 0.5 m/s. Even though the speed is lower compared to when a packaging material is running through a converting station, a slower speed allows for the use of several different application methods for applying the heat sealable material 410, 510 on to the innermost layer 203, 203', 303, 403, 503.

Application of the heat sealable material portion 204, 204', 304, 404, 504 during the laminating/manufacturing process of converting will not be equally satisfactory, since the laminated packaging material 200, 200', 300, 400, 500 comprising locally distributed heat sealable material portions 204, 204', 304, 404, 504 will no longer be homogenously flat. Hence, the laminated packaging material 200, 200', 300, 400, 500 cannot be reeled as a material reel 110 without damages and problems. The added heat sealable material portion 204, 204', 304, 404, 504 will "build-up" while reeling and might provide uneven reels 110.

Furthermore, as mentioned above, normally the running speeds in converting are much higher than in the filing machine, which makes the application of a heat sealable material portion 204, 204', 304, 404, 504 difficult. A local application of the extra heat sealable material portion 204, 204', 304, 404, 504 during converting is thus much less preferred.

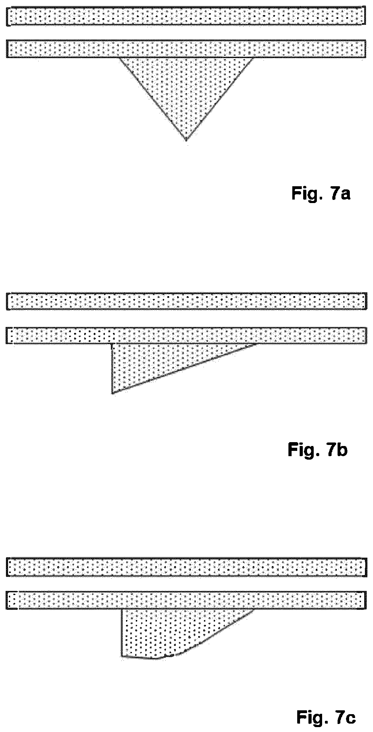

Fig. 7a-f show further alternatives to the cross-sections in Figs. 4c and 5c, taken in a direction perpendicular to a longitudinal extension of the transversal seal TS and/or the sealing elements 704 a-f.

In Fig. 7a, the cross-section is triangular, which is an advantage in ultra-sonic heat sealing methods. As mentioned above, the cross-section may alternative be in the shape of a truncated such triangle, providing the same effect. The apex, or narrower top part of the applied profile of the additional material portion, will ensure that the heat generation takes place in a more focussed manner. The apex or top may alternatively be rounded, i.e. the cross-section being approximately triangular.

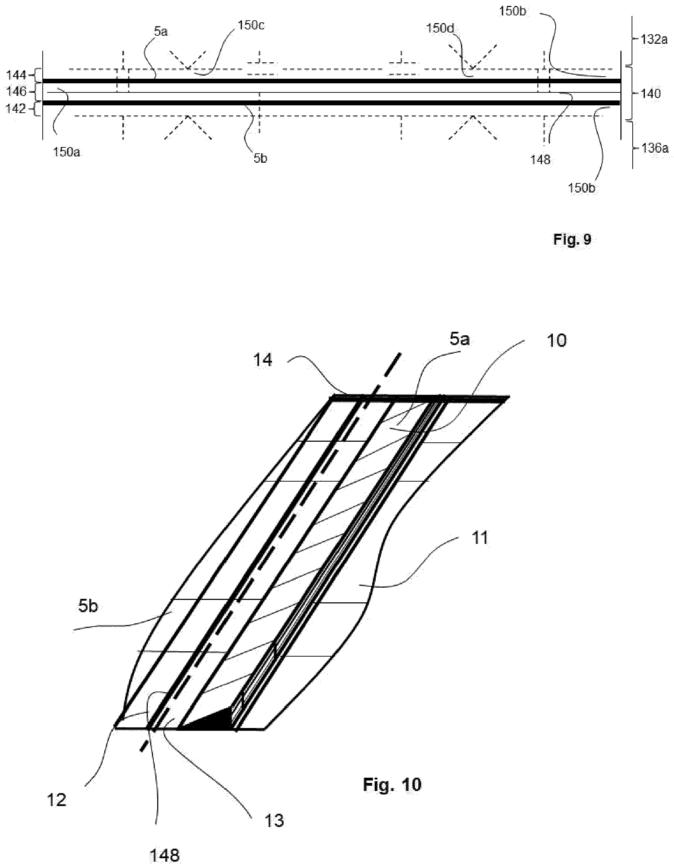

Fig. 7b shows a similar but asymmetric cross-section, for the same purpose, having the bulk of the added material laterally shifted within the cross-section of the applied portion of heat sealable material. This profile may be used along the full extension of the transversal heat seal, or along parts of it, at positions where reduction of the amount of added material is desirable. For the heat sealing of large packages of liquid content, it may be desirable to add a higher amount of polymer material, but still avoid that any such superfluous material flows out in the sealing fin areas and disturbs the cutting action, as explained in connection to figure 10, below.

Fig. 7c shows an embodiment wherein the cross-section is asymmetric, but capable of holding a higher amount of heat sealable material, which may be advantageous for larger packaging containers for liquid products, than regarding Fig. 7b.

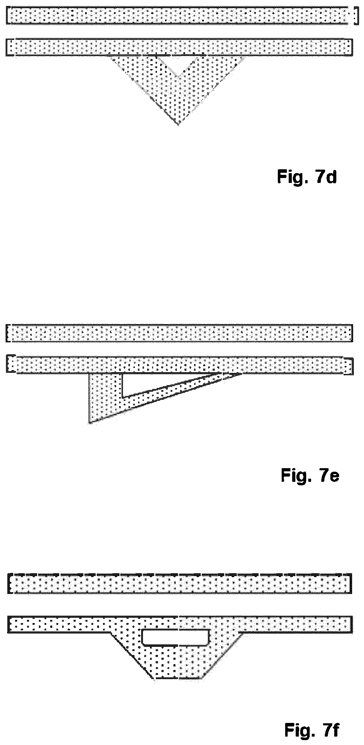

In Fig. 7d, 7e and 7f, embodiments having a similar cross-section to Fig. 7a, 7b and 5c respectively, but having a hollow interior, are shown. These embodiments may be suitable for heat sealing of smaller packages, such as portion packages of up to 300 ml of liquid beverage or food, for which a lower-strength heat seal will be suitable, or when a broader base of the seal towards the innermost layer is desired. By these embodiments, a broad transversal seal, having a reduced amount of heat sealable material but at the same time a focussed generation of heat for an optimal sealing process, will be possible.

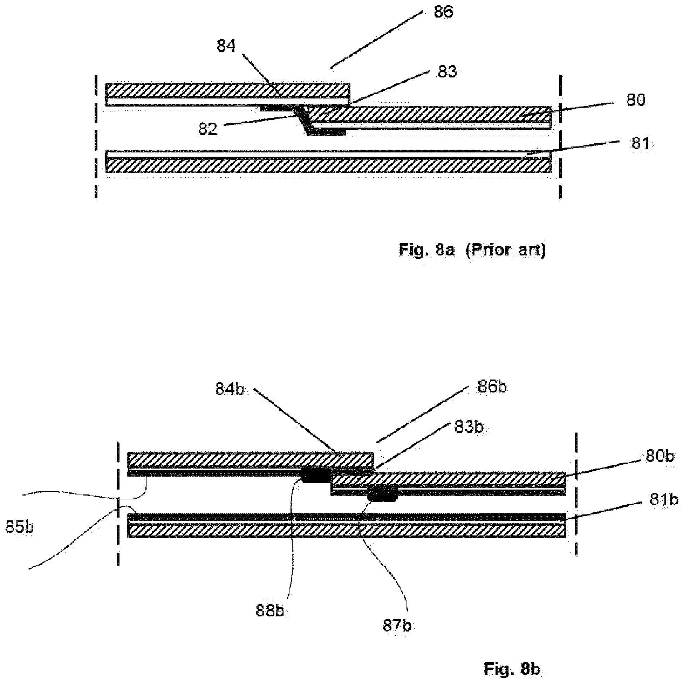

Fig. 8a shows a cross-section of a prior art folded tube (of which the folded transversal edge regions are not shown), from a conventional laminated packaging material 80 having an innermost heat sealable layer 81, in the process of being transversally sealed, such that the innermost heat sealable layer 81 is sealed to itself on the opposing wall of the tube. To cover the open edge 83 of the laminated packaging material on the inside of the tube, there is applied a longitudinal strip 82 of a heat sealable material, onto the inside longitudinal edge 83. The longitudinal strip 82 is sealed over the open inside longitudinal edge 83 and further sealed to the inside of the outside edge 84 of the packaging material 80, such that the longitudinal overlap seal area will be tightly sealed and protected from contact with the filled liquid product, on the inside of the tube, by the longitudinal strip 82.

Fig. 8b-c show variants of cross-sections of a folded tube to be transversally sealed, instead having only a very thin layer of heat sealable material on the inside of the laminated packaging material, and in addition having locally applied heat sealable material portions applied at least partly along the extension of the transversal seal area. To cover the open edge 83 of the laminated packaging material on the inside of the tube, there will be still applied a longitudinal strip 82 of a heat sealable material, onto the inside longitudinal edge 83, as described above, but for visibility reasons in these figures, the longitudinal strip 82 is not shown.

Fig. 8b, thus shows a cross-section of a folded tube (of which the folded transversal edge regions are not shown), from a laminated packaging material 80b having a very thin innermost heat sealable layer 81b, in the process of being transversally sealed, such that the inside surface with the innermost heat sealable layer 81b may be sealed to itself on the opposing wall of the tube. The applied thickness of the innermost layer 81b is only sufficient to protect the interior layers of the packaging laminate, such as a paperboard bulk or core layer and a film or foil carrying a barrier layer or coating, against moisture and dirt, but not sufficient to provide a strong, durable heat seal for a liquid carton package. A locally applied heat sealable material portion 85 is applied along the extension of the transversal seal area, seen from the view in this figure as a local thickness in addition to the previously applied innermost layer 81b. The locally applied heat sealable material portion 85 is applied as a strand of material along the entire extension of the transversal seal area. Independent of cross-sectional profile, the applied strand will just appear as an additional thicker layer, from this view. In addition, additional amounts 87b and 88b of heat sealable material is applied close to the longitudinal edges 83 and 84 of the web of packaging material, in order to form a strong and durable overlap seal 86b also along the longitudinal seam of the packaging material tube. There will be a higher pressure acting on the area of the longitudinal seal LS, due to the double layers of material at the overlap seam, when the bars of the transversal sealing jaws press the walls of the tube to each other to form a flat transversal seal. To ensure that sufficient heat sealable material stays within the LS overlap area, an extra amount is applied at the edge areas, as illustrated. The additional material 85b is applied along the entire extension of the transversal seal, to correspond to a thicker innermost layer at least in the seal area.

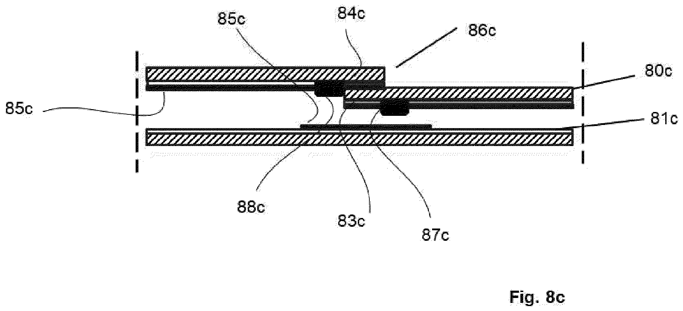

Fig. 8c shows an alternative cross-section of a folded tube (of which the folded transversal edge regions are not shown), from a laminated packaging material 80c having a very thin innermost heat sealable layer 81c, in the process of being transversally sealed, such that the inside surface with the innermost heat sealable layer 81c may be sealed to itself on the opposing wall of the tube. The applied thickness of the innermost layer 81c is only sufficient to protect the interior layers of the packaging laminate, such as a paperboard bulk or core layer and a film or foil carrying a barrier layer or coating, against moisture and dirt, but not sufficient to provide a strong, durable heat seal for a liquid carton package. A locally applied heat sealable material portion 85c is applied along some parts of the extension of the transversal seal area, seen from the view in this figure as a local thickness in addition to the previously applied innermost layer 81c. The locally applied heat sealable material portion 85c is thus applied as a strand of material along parts of the extension of the transversal seal area. Independent of cross-sectional profile, the applied strand will just appear as an additional thicker layer, from this view. In addition, additional amounts 87c and 88c of heat sealable material is applied close to the longitudinal edges 83c and 84c of the web of packaging material, in order to form a strong and durable overlap seal 86c also along the longitudinal seam of the packaging material tube, for the same purpose, as described above.

Fig. 9 shows the transversal sealing area 140, encompassing the upper end seal 5a (the future position of which is indicated by the thick line) and the lower end seal 5b (the future position of which being indicated by a thick line) as seen from above on the inside of a web of flat packaging material. The area of packaging material 132a above the upper end seal 5a corresponds to one package unit, and has a set of crease lines applied to it that will enable later fold forming of that package. The end seal 5a will normally become the top seal of that formed package, why we also call it "upper" end seal. It could, however, alternatively become the bottom seal of the formed package, depending on how the filling machine is configured. The area of packaging material 136a below the lower end seal 5b thus corresponds to another package unit, and has a set of crease lines applied to it that will enable later fold forming of that other package. The end seal 5b will normally become the bottom seal of that formed package, why we here call it "lower" end seal.

The later-to-be-formed cutting area 5c of the tube extends between the upper end seal 5a and the lower end seal 5b.

Thus, the transversal sealing area 140 comprises a lower sealing area 142, which is to form the lower seal of the package below as positioned in the tube at filling, an upper sealing area 144, which is to form the upper seal of the package above as positioned in the tube at filling, and a cutting area 146 arranged between the lower and upper sealing areas 142, 144.

Packages are cut off from a tube of the packaging material along a center line of the transversal cutting area 146, i.e. along a transversal linear cut 148. When the packages are cut off from the tube, they will thus have a narrow fin of packaging material extending below and above the upper and lower transversal seals 5a and 5b, respectively.

The additional heat sealable material is applied locally along the extensions of the lower and upper end seals, 5a and 5b.

Generally, a larger amount of heat sealable material may be arranged along the extensions of the end seal areas 5a,b at a lateral position corresponding to the position of the longitudinal seal of the tube 150a, 150b, where the longitudinal edges of the web-shaped packaging material are to overlap each other. When the bars of the transversal sealing jaws press the walls of the tube to each other to form a flat transversal seal, there will be higher pressure on the area of the longitudinal seal LS due to the double layers of material at the overlap seam 86. To ensure some heat sealable material to stay within the overlap, an extra amount is applied to this area. The extra amount is visible on the locally applied portion as a higher, or , as viewed from above as in this figure, a broader portion at the positions just beside the overlap seam.

A larger amount of heat sealable material may also be arranged along the extensions of the end seal areas 5a,b at a lateral position corresponding to the position where the tube will be folded during sealing, i.e. at a position corresponding to the lateral edge of the tube. The additional amount of thermoplastic polymer material has proven to improve seal strength of the tube at such positions 150c, 150d, thus also improving the integrity and appearance of the final package.

Similar larger amounts of heat sealable material may also be applied at other positions along the extensions of the end seal areas 5a, 5b to ensure a proper and durable transversal seal in the packages formed in the tube-filling and sealing operation.

Fig. 10 shows an isometric view along the extension of the locally applied portion of heat sealable material 10, at an upper transversal seal 5a, i.e. the transversal seal which is to become the upper seal of a first package formed from the package unit 11. The linear area 12 which will become the transversal linear cut 148 is shown beside the dotted line. On the other side of the linear area 12, there is a corresponding locally applied portion of heat sealable material, not shown, at a lower transversal seal 5b, i.e. the transversal seal area which is to comprise the lower seal of a package formed from the adjacent package unit below the first package. As is shown in Fig. 10, the locally applied portion of heat sealable material 10 has an asymmetric cross-section, to avoid that the locally applied additional material will be floating too far into the upper sealing fin 13 below the upper seal 5a, when sealed. If too much of the heat sealable material floats in this direction during sealing, it may reach the cutting knife in operation and create problems, e.g. that molten heat sealable material may solidify during the cutting operation such as to cause that the cut off packages may still stick to each other, cause additional wear of the sharp knife and clogging of the launching and retracting mechanism of the knife. In this particular embodiment shown, the cross-section of the locally applied portion of heat sealable material is triangular, and thus has a declining surface towards the cutting line. In addition, there may be added a higher amount of heat sealable material at some positions along the extension of the end seal, such as at the areas to form the longitudinal overlap seal and at the folded edges of the tube in the transversal seal areas, as described above.

From the description above follows that, although various embodiments of the invention have been described and shown, the invention is not restricted thereto, but may also be embodied in other ways within the scope of the subject-matter defined in the following claims.

## Claims

1. A packaging material comprising a core layer (201, 201', 401, 501), an outermost layer (202, 202', 402, 502) arranged to face the exterior of a packaging container made of the packaging material (200, 200', 400, 500), and an innermost layer (203, 203', 403, 503) arranged to face the interior of the packaging container, said outermost layer (202, 202', 402, 502) and said innermost layer (203, 203', 403, 503) being laminated to the core layer (201, 201', 401, 501),
**characterized in that** the laminated packaging material (200, 200', 400, 500) further comprises a locally applied heat sealable material portion (204, 204', 404, 504) arranged on the innermost layer (203, 203', 403, 503), wherein the heat sealable material portion (204, 204', 404, 504) has a cross-section having a width which increases towards the innermost layer (203, 203' 403, 503) and wherein the heat sealable material portion (204, 204', 404, 504) is arranged at sealing areas corresponding to the position of transversal seals (TS) of the resulting packaging container.

2. The packaging material according to claim 1, wherein the heat sealable material portion (204, 204', 404, 504) is adhered to the innermost layer (203, 203', 403, 503) by means of a heat application process, being an injection moulding process, a sintering process, a welding process, a spraying process, an ink-jet type of polymer printing process, a compression moulding process or a 3D printing process.

3. The packaging material according to any one of the preceding claims, wherein the thickness of the heat sealable material portion (203, 203' 403, 503) is 2-50 µm, preferably 3-30 µm, such as 3-20 µm, or 5-20 µm, and most preferred 5-15 µm.

4. The packaging material according to any one of the preceding claims, wherein the heat sealable material portion has a cross-section having the shape of a triangle, or a truncated triangle.

5. The packaging material according to any one of the preceding claims, wherein the heat sealable material portion has a cross-section having an asymmetric shape.

6. The packaging material according to claim 1, wherein the heat sealable material portion (204, 204', 404, 504) is arranged along the entire extension of the transversal sealing areas.

7. The packaging material according to any one of the preceding claims, wherein the heat sealable material portion is arranged to have a varying cross-section along the extension of the transversal sealing areas.

8. The packaging material according to any one of the preceding claims, wherein the heat sealable material portion has a cross-section providing a higher amount of polymer material at predetermined positions along the extension of the transversal sealing areas.

9. The packaging material according to any one of the preceding claims, wherein a higher amount of heat sealable material is applied at positions close to the longitudinal edges of the packaging material, along the extension of the transversal sealing area.

10. The packaging material according to any one of the preceding claims, wherein the seal initiation temperature, i.e. the softening temperature, such as Vicat point or glass temperature (Tg) and/or the melting temperature (Tm), of the thermoplastic polymer of the of the locally applied heat sealable material portion is lower than a corresponding seal initiation temperature of the thermoplastic polymer of the innermost layer.

11. The packaging material according to any one of the preceding claims, wherein the heat sealable material portion (204, 204', 404, 504) is made of a thermoplastic polymer selected from the group consisting of polyolefins and polyesters.

12. The packaging material according to any one of the preceding claims, wherein the packaging material (200, 200', 400, 500) further comprises a barrier layer (205') arranged between the core layer (201, 201', 401, 501) and the innermost layer (203, 203', 403, 503).

13. The packaging material according to any one of the preceding claims, wherein the core layer (201, 201', 401, 501) is a cellulose based material, such as paper or paperboard.

14. A method for producing a packaging container from a packaging material (200, 200', 400, 500), the method (600) comprises the steps of:
providing the packaging material by laminating (610) an innermost layer (203, 203', 403, 503) and an outermost layer (202, 202', 402, 502) to a core layer (201, 201', 401, 501);
heat applying (650) a heat sealable material portion (204, 204', 404, 504) locally to said innermost layer (203, 203', 403, 503), in such a way that the cross-section of the heat sealable material portion has a width which increases towards the innermost layer, wherein the heat sealable material portion (204, 204', 404, 504) is arranged at sealing areas corresponding to the position of transversal seals (TS) of the resulting packaging container;
forming a packaging container from said packaging material (200, 200', 400, 500);
filling said packaging container; and
heat sealing said package container by means of the heat sealable material portion (204, 204', 404, 504) to form a closed packaging container.

15. The method according to claim 14, wherein heat applying (650) is performed using an injection moulding process, a sintering process, a welding process, a spraying process, a compression moulding process, an ink-jet type of polymer printing process or a 3D printing process

16. The method according to claim 14 or 15, wherein said innermost layer (203, 203', 403, 503) is selected from a heat sealable polymer, preferably a thermoplastic polymer selected from polyolefins, such as polyethylenes, and from polyesters.

17. A packaging container made of a packaging material according to any one of claims 1-13.

## Patentansprüche

1. Verpackungsmaterial, umfassend eine Kernschicht (201, 201', 401, 501), eine äußerste Schicht (202, 202', 402, 502), die so angeordnet ist, dass sie der Umgebung eines aus dem Verpackungsmaterial (200, 200', 400, 500) hergestellten Verpackungsbehälters zugewandt ist, und eine innerste Schicht (203, 203', 403, 503), die so angeordnet ist, dass sie dem Inneren des Verpackungsbehälters zugewandt ist, wobei die äußerste Schicht (202, 202', 402, 502) und die innerste Schicht (203, 203', 403, 503) auf die Kernschicht (201, 201', 401, 501) laminiert sind,
**dadurch gekennzeichnet, dass** das laminierte Verpackungsmaterial (200, 200', 400, 500) ferner einen lokal aufgebrachten heißsiegelbaren Materialabschnitt (204, 204', 404, 504) umfasst, der auf der innersten Schicht (203, 203', 403, 503) angeordnet ist, wobei der heißsiegelbare Materialabschnitt (204, 204', 404, 504) einen Querschnitt aufweist, dessen Breite zu der innersten Schicht (203, 203' 403, 503) hin zunimmt, und wobei der heißsiegelbare Materialabschnitt (204, 204', 404, 504) an Siegelbereichen angeordnet ist, die der Position quer verlaufender Siegelnähte (TS) des resultierenden Verpackungsbehälters entsprechen.

2. Verpackungsmaterial nach Anspruch 1, wobei der heißsiegelbare Materialabschnitt (204, 204', 404, 504) mittels eines Wärmeaufbringprozesses, bei dem es sich um einen Spritzgießprozess, einen Sinterprozess, einen Schweißprozess, einen Sprühprozess, einen Prozess zum Drucken eines Polymers vom Tintenstrahltyp, einen Formpressprozess oder einen 3D-Druck-Prozess handelt, mit der innersten Schicht (203, 203', 403, 503) haftverbunden wird.

3. Verpackungsmaterial nach einem der vorangehenden Ansprüche, wobei die Dicke des heißsiegelbaren Materialabschnitts (203, 203' 403, 503) 2-50 um, vorzugsweise 3-30 um, wie etwa 3-20 µm, oder 5-20 um, ganz besonders bevorzugt 5-15 um, beträgt.

4. Verpackungsmaterial nach einem der vorangehenden Ansprüche, wobei der heißsiegelbare Materialabschnitt einen Querschnitt mit der Form eines Dreiecks oder eines abgeschnittenen Dreiecks aufweist.

5. Verpackungsmaterial nach einem der vorangehenden Ansprüche, wobei der heißsiegelbare Materialabschnitt einen Querschnitt mit einer asymmetrischen Form aufweist.

6. Verpackungsmaterial nach Anspruch 1, wobei der heißsiegelbare Materialabschnitt (204, 204', 404, 504) entlang der gesamten Erstreckung der quer verlaufenden Siegelbereiche angeordnet ist.

7. Verpackungsmaterial nach einem der vorangehenden Ansprüche, wobei der heißsiegelbare Materialabschnitt so angeordnet ist, dass er entlang der Erstreckung der quer verlaufenden Siegelbereiche einen variierenden Querschnitt aufweist.

8. Verpackungsmaterial nach einem der vorangehenden Ansprüche, wobei der heißsiegelbare Materialabschnitt einen Querschnitt aufweist, der an vorgegebenen Positionen entlang der Erstreckung der quer verlaufenden Siegelbereiche eine größere Menge an Polymermaterial bereitstellt.

9. Verpackungsmaterial nach einem der vorangehenden Ansprüche, wobei an Positionen nahe den Längskanten des Verpackungsmaterials entlang der Erstreckung des quer verlaufenden Siegelbereiches eine größere Menge an heißsiegelbarem Material aufgebracht ist.

10. Verpackungsmaterial nach einem der vorangehenden Ansprüche, wobei die Siegelinitiierungstemperatur, d. h. die Erweichungstemperatur, wie etwa der Vicat-Punkt oder die Glastemperatur (Tg) und/oder die Schmelztemperatur (Tm), des thermoplastischen Polymers des lokal aufgebrachten heißsiegelbaren Materialabschnitts niedriger als eine entsprechende Siegelinitiierungstemperatur des thermoplastischen Polymers der innersten Schicht ist.

11. Verpackungsmaterial nach einem der vorangehenden Ansprüche, wobei der heißsiegelbare Materialabschnitt (204, 204', 404, 504) aus einem thermoplastischen Polymer, ausgewählt aus der Gruppe bestehend aus Polyolefinen und Polyestern, hergestellt ist.

12. Verpackungsmaterial nach einem der vorangehenden Ansprüche, wobei das Verpackungsmaterial (200, 200', 400, 500) ferner eine Barriereschicht (205') umfasst, die zwischen der Kernschicht (201, 201', 401, 501) und der innersten Schicht (203, 203', 403, 503) angeordnet ist.

13. Verpackungsmaterial nach einem der vorangehenden Ansprüche, wobei die Kernschicht (201, 201', 401, 501) ein Material auf Zellulosebasis, wie etwa Papier oder Karton, ist.

14. Verfahren zur Herstellung eines Verpackungsbehälters aus einem Verpackungsmaterial (200, 200', 400, 500), wobei das Verfahren (600) folgende Schritte umfasst:
Bereitstellen des Verpackungsmaterials durch Laminieren (610) einer innersten Schicht (203, 203', 403, 503) und einer äußersten Schicht (202, 202', 402, 502) auf eine Kernschicht (201, 201', 401, 501);
Wärmeaufbringen (650) eines heißsiegelbaren Materialabschnitts (204, 204', 404, 504) lokal auf die innerste Schicht (203, 203', 403, 503), derart dass der Querschnitt des heißsiegelbaren Materialabschnitts eine Breite aufweist, die zu der innersten Schicht hin zunimmt, wobei der heißsiegelbare Materialabschnitt (204, 204', 404, 504) an Siegelbereichen angeordnet ist, die der Position quer verlaufender Siegelnähte (TS) des resultierenden Verpackungsbehälters entsprechen;
Ausbilden eines Verpackungsbehälters aus dem Verpackungsmaterial (200, 200', 400, 500);
Füllen des Verpackungsbehälters; und
Heißsiegeln des Verpackungsbehälters mittels des heißsiegelbaren Materialabschnitts (204, 204', 404, 504), um einen geschlossenen Verpackungsbehälter auszubilden.

15. Verfahren nach Anspruch 14, wobei das Wärmeaufbringen (650) unter Nutzung eines Spritzgießprozesses, eines Sinterprozesses, eines Schweißprozesses, eines Sprühprozesses, eines Formpressprozesses, eines Prozesses zum Drucken eines Polymers vom Tintenstrahltyp oder eines 3D-DruckProzesses erfolgt.

16. Verfahren nach Anspruch 14 oder 15, wobei die innerste Schicht (203, 203', 403, 503) aus einem heißsiegelbaren Polymer, vorzugsweise einem thermoplastischen Polymer, ausgewählt aus Polyolefinen, wie etwa Polyethylenen, und aus Polyestern, ausgewählt ist.

17. Verpackungsbehälter, der aus einem Verpackungsmaterial nach einem der Ansprüche 1-13 hergestellt ist.

## Revendications

1. Matériau d'emballage comprenant une couche centrale (201, 201', 401, 501), une couche la plus externe (202, 202', 402, 502) agencée pour faire face à l'extérieur d'un récipient d'emballage fait du matériau d'emballage (200, 200', 400, 500), et une couche la plus interne (203, 203', 403, 503) agencée pour faire face à l'intérieur du récipient d'emballage, ladite couche la plus externe (202, 202', 402, 502) et ladite couche la plus interne (203, 203', 403, 503) étant stratifiées sur la couche centrale (201, 201', 401, 501),
**caractérisé en ce que** le matériau d'emballage stratifié (200, 200', 400, 500) comprend en outre une partie de matériau thermoscellable appliquée localement (204, 204', 404, 504) agencée sur la couche la plus interne (203, 203', 403, 503), la partie de matériau thermoscellable (204, 204', 404, 504) ayant une section transversale ayant une largeur qui augmente vers la couche la plus interne (203, 203', 403, 503) et la partie de matériau thermoscellable (204, 204', 404, 504) étant agencée au niveau de zones de scellement correspondant à la position des scellements transversaux (TS) du récipient d'emballage résultant.

2. Matériau d'emballage selon la revendication 1, la partie de matériau thermoscellable (204, 204', 404, 504) étant collée sur la couche la plus interne (203, 203', 403, 503) au moyen d'un processus d'application de chaleur, qui est un processus de moulage par injection, un processus de frittage, un processus de soudage, un processus de pulvérisation, un processus d'impression polymère de type jet d'encre, un processus de moulage par compression ou un processus d'impression 3D.

3. Matériau d'emballage selon l'une quelconque des revendications précédentes, l'épaisseur de la partie de matériau thermoscellable (203, 203', 403, 503) étant de 2 à 50 um, de préférence de 3 à 30 um, telle que 3 à 20 µm, ou 5 à 20 um, et de manière plus préférée de 5 à 15 µm.

4. Matériau d'emballage selon l'une quelconque des revendications précédentes, la partie de matériau thermoscellable présentant une section transversale ayant la forme d'un triangle, ou d'un triangle tronqué.

5. Matériau d'emballage selon l'une quelconque des revendications précédentes, la partie de matériau thermoscellable présentant une section transversale ayant une forme asymétrique.

6. Matériau d'emballage selon la revendication 1, la partie de matériau thermoscellable (204, 204', 404, 504) étant agencée sur toute l'extension des zones de scellement transversales.

7. Matériau d'emballage selon l'une quelconque des revendications précédentes, la partie de matériau thermoscellable étant agencée pour avoir une section transversale variable le long de l'extension des zones de scellement transversales.

8. Matériau d'emballage selon l'une quelconque des revendications précédentes, la partie de matériau thermoscellable ayant une section transversale fournissant une plus grande quantité de matériau polymère à des positions prédéterminées le long de l'extension des zones de scellement transversales.

9. Matériau d'emballage selon l'une quelconque des revendications précédentes, une quantité plus élevée de matériau thermoscellable étant appliquée à des positions proches des bords longitudinaux du matériau d'emballage, le long de l'extension de la zone de scellement transversale.

10. Matériau d'emballage selon l'une quelconque des revendications précédentes, la température d'initiation du scellement, c'est-à-dire la température de ramollissement, telle que le point de Vicat ou la température de transition vitreuse (Tg) et/ou la température de fusion (Tm), du polymère thermoplastique de la partie de matériau thermoscellable appliquée localement étant inférieure à une température d'initiation du scellement correspondante du polymère thermoplastique de la couche la plus interne.

11. Matériau d'emballage selon l'une quelconque des revendications précédentes, la partie de matériau thermoscellable (204, 204', 404, 504) étant constituée d'un polymère thermoplastique choisi dans le groupe constitué par les polyoléfines et les polyesters.

12. Matériau d'emballage selon l'une quelconque des revendications précédentes, le matériau d'emballage (200, 200', 400, 500) comprenant en outre une couche barrière (205') agencée entre la couche centrale (201, 201', 401, 501) et la couche la plus interne (203, 203', 403, 503).

13. Matériau d'emballage selon l'une quelconque des revendications précédentes, la couche centrale (201, 201', 401, 501) étant un matériau à base de cellulose, tel que du papier ou du carton.

14. Procédé de production d'un récipient d'emballage à partir d'un matériau d'emballage (200, 200', 400, 500), le procédé (600) comprenant les étapes de :
fourniture du matériau d'emballage en stratifiant (610) une couche la plus interne (203, 203', 403, 503) et une couche la plus externe (202, 202', 402, 502) sur une couche centrale (201, 201', 401, 501) ;
application à chaud (650) d'une partie de matériau thermoscellable (204, 204', 404, 504) localement sur ladite couche la plus interne (203, 203', 403, 503), de telle sorte que la section transversale de la partie de matériau thermoscellable a une largeur qui augmente vers la couche la plus interne, la partie de matériau thermoscellable (204, 204', 404, 504) étant agencée au niveau de zones de scellement correspondant à la position de scellements transversaux (TS) du récipient d'emballage résultant ;
formation d'un récipient d'emballage à partir dudit matériau d'emballage (200, 200', 400, 500) ;
remplissage dudit récipient d'emballage ; et
scellage à chaud dudit récipient d'emballage au moyen de la partie de matériau thermoscellable (204, 204', 404, 504) pour former un récipient d'emballage fermé.

15. Procédé selon la revendication 14, l'application de chaleur (650) étant effectuée en utilisant un procédé de moulage par injection, un procédé de frittage, un procédé de soudage, un procédé de pulvérisation, un procédé de moulage par compression, un procédé d'impression de polymère de type jet d'encre ou un procédé d'impression 3D.

16. Procédé selon la revendication 14 ou 15, ladite couche la plus interne (203, 203', 403, 503) étant choisie parmi un polymère thermoscellable, de préférence un polymère thermoplastique choisi parmi les polyoléfines, telles que les polyéthylènes, et parmi les polyesters.

17. Récipient d'emballage constitué d'un matériau d'emballage selon l'une quelconque des revendications 1 à 13.
